# EUROPÄISCHE PATENTANMELDUNG

(11) **EP 4 411 025 A2**
(43) Veröffentlichungstag der Anmeldung: **07.08.2024**
(21) Anmeldenummer: 23205420.5
(22) Anmeldetag: 24.10.2023
(51) Int. Cl.: C25B 1/30, C25B 9/19, C25B 15/02, C25B 15/023, C25B 15/08

(54) **WASSERFÜHRENDES ELEKTRISCHES GERÄT UND VERFAHREN ZUM BETREIBEN DES WASSERFÜHRENDEN ELEKTRISCHEN GERÄTS**

(30) Priorität: 15.11.2022 DE 102022130124
(71) Anmelder: Miele & Cie. KG, 33332 Gütersloh (DE); Technische Universität Clausthal, 38678 Clausthal-Zellerfeld (DE)
(72) Erfinder: Strothoff, Werner, 48336 Sassenberg (DE); Enstrup, Marius Simon, 38678 Clausthal-Zellerfeld (DE); Kunz, Ulrich, 37520 Osterode am Harz (DE)

(57) **Zusammenfassung**

Die Erfindung betrifft ein wasserführendes elektrisches Gerät mit einem Reinigungsbereich und einer elektrochemischen Zelle (1), die ausgebildet ist, ein Bleichmittel herzustellen, wobei die elektrochemische Zelle (1) einen Kathodenraum (2) mit einer Kathode (3), einen Anodenraum (4) mit einer Anode (5), einen Separator (6) zum Trennen des Kathodenraums (2) und des Anodenraums (4) in einer Zero Gap-Anordnung mit der Anode (5) und ein Flüssigkeitsleitsystem aufweist, das ausgebildet ist, die elektrochemische Zelle (1) mit Flüssigkeit zu befüllen, die Flüssigkeit aus einem ersten Bereich der elektrochemischen Zelle (1) in einen zweiten Bereich der elektrochemischen Zelle (1) zu fördern und die Flüssigkeit aus der elektrochemischen Zelle (1) in den Reinigungsbereich zu fördern. Ferner betrifft die Erfindung ein Verfahren zum Betreiben des wasserführenden elektrischen Geräts, aufweisend folgende Schritte Befüllen der elektrochemischen Zelle (1) mit der Flüssigkeit; Umwälzen der Flüssigkeit in dem Kathodenraum (2) und ggf. dem weiteren Kathodenraum (2a) oder dem Vorratsbehälter (7) im Kreislauf und Anlegen eines Stroms an die Kathode (3) und die Anode (5), um ein Bleichmittel in einer vorbestimmten Menge herzustellen; und Fördern der vorbestimmten Menge des hergestellten Bleichmittels in den Reinigungsbereich.

## Beschreibung

Die Erfindung betrifft ein wasserführendes elektrisches Gerät und ein Verfahren zum Betreiben des wasserführenden elektrischen Geräts. Insbesondere betrifft die Erfindung ein wasserführendes elektrisches Gerät mit einer elektrochemischen Zelle und ein Verfahren zum Betreiben des wasserführenden elektrischen Geräts zur Herstellung eines Bleichmittels wie Wasserstoffperoxid in der elektrochemischen Zelle.

Aus der EP 3 865 616 A1 ist ein wasserführendes elektrisches Gerät mit einer Bleicheinrichtung, einer elektrochemischen Zelle mit mehreren Komponenten und einer Steuer- und/oder Regeleinrichtung bekannt, die ausgebildet ist, eine oder mehrere der Komponenten der elektrochemischen Zelle zu steuern und/oder zu regeln. Der Aufbau ist jedoch kompliziert. Zudem ist es wünschenswert, eine zum Reinigen ausreichende Menge an Bleichmittel mittels der elektrochemischen Zelle in möglichst kurzer Zeit herzustellen.

Der Erfindung stellt sich somit das Problem, ein wasserführendes elektrisches Gerät und ein Verfahren zum Betreiben des wasserführenden elektrischen Geräts bereitzustellen, das eine elektrochemische Zelle mit einem einfachen Aufbau aufweist, die ausgebildet ist, in möglichst kurzer Zeit, ein Bleichmittel in einer Menge herzustellen, die eine zufriedenstellende Reinigungswirkung bereitstellt.

Erfindungsgemäß wird dieses Problem durch ein wasserführendes elektrisches Gerät mit den Merkmalen des Patentanspruchs 1 und ein Verfahren mit den Merkmalen des Patentanspruchs 10 gelöst. Vorteilhafte Ausgestaltungen und Weiterbildungen der Erfindung ergeben sich aus den nachfolgenden Unteransprüchen.

Die mit der Erfindung erreichbaren Vorteile bestehen neben einem einfachen Aufbau der elektrochemischen Zelle in einer verbesserten Hygiene im Reinigungsbereich selber und/oder bei in ihm zu reinigendem Gut und in einer verbesserten Sicherheit für einen Nutzer des wasserführenden elektrischen Geräts. Die Erzeugung des Bleichmittel aus Strom, Luft und einer Komponente wie ein Wasserenthärter ist ökologisch und kostengünstig. Zudem ist eine Herstellung von 1 bis 3 g Peressigsäure oder 3 g alkalischen Wasserstoffperoxid als Bleichmittel für einen Bleichvorgang innerhalb von 20 Min. möglich.

Die Erfindung betrifft ein wasserführendes elektrisches Gerät mit einem Reinigungsbereich und einer elektrochemischen Zelle, die ausgebildet ist, ein Bleichmittel herzustellen, wobei die elektrochemische Zelle einen Kathodenraum mit einer Kathode, einen Anodenraum mit einer Anode, einen Separator zum Trennen des Kathodenraums und des Anodenraums in einer Zero Gap-Anordnung mit der Anode und ein Flüssigkeitsleitsystem aufweist, das ausgebildet ist, die elektrochemische Zelle mit Flüssigkeit zu befüllen, die Flüssigkeit aus einem ersten Bereich der elektrochemischen Zelle in einen zweiten Bereich der elektrochemischen Zelle zu fördern und die Flüssigkeit aus der elektrochemischen Zelle in den Reinigungsbereich zu fördern.

Die elektrochemische Zelle ist als Zero-Gap Zelle aufgebaut, d. h., dass der Separator auf der Anode, welche beispielsweise als Lochblech, Netz oder Streckmetall ausgeführt ist, aufliegt und der Elektrodenabstand dadurch verringert werden kann. Daraus resultiert eine geringere Zellspannung, wodurch sich der Energieeintrag reduziert und zeitgleich ein kostengünstigeres Netzteil mit geringerer Leistung verwendet werden kann. Des Weiteren wird ein Temperaturanstieg in der elektrochemischen Zelle reduziert, was sich positiv auf die Stromeffizienz auswirkt, da mit steigender Elektrolyttemperatur eine Autozersetzung des Bleichmittels wie Wasserstoffperoxid tendenziell zunimmt. Die elektrochemische Zelle ist einfach aufgebaut. Sie ist zudem kostengünstig herstellbar.

Das Flüssigkeitsleitsystem ist ausgebildet, die elektrochemische Zelle mit Flüssigkeit zu befüllen, d.h. ihr bevorzugt Wasser und eine oder mehrere in dem Wasser gelöste und/oder gemischte Komponenten z.B. in Form eines Konzentrats als die Flüssigkeit zuzuführen. Die Flüssigkeit ist bevorzugt als Elektrolytlösung ausgebildet. Das Wasser und die Komponente(n) können der elektrochemischen Zelle zusammen oder getrennt voneinander zugeführt werden. Ferner ist das Flüssigkeitsleitsystem ausgebildet, die Flüssigkeit aus einem ersten Bereich der elektrochemischen Zelle in einen zweiten Bereich der elektrochemischen Zelle zu fördern. Das Flüssigkeitsleitsystem kann ausgebildet sein, die Flüssigkeit aus dem ersten Bereich der elektrochemischen Zelle in den zweiten Bereich der elektrochemischen Zelle einmal zu fördern und dann in den Reinigungsbereich zu fördern, der den Anwendungsort des Bleichmittels darstellt. Das Flüssigkeitsleitsystem ist bevorzugt ausgebildet, die Flüssigkeit aus dem ersten Bereich der elektrochemischen Zelle in den zweiten Bereich der elektrochemischen Zelle mehrmals zu fördern. Dazu weist es z.B. eine Pumpe auf, die ausbildet ist eine Umwälzung der Flüssigkeit bereitzustellen. Durch die Umwälzung kann die Flüssigkeit im Kreislauf geführt werden, bis die vorbestimmte Bleichmittelmenge erzeugt ist, und dann kann das Bleichmittel dem Reinigungsraum zugeführt werden, um zum Bleichen bzw. Reinigen zum Einsatz zu kommen. Z.B., kann die Pumpe das hergestellte Bleichmittel in den Reinigungsbereich fördern. Der Reinigungsbereich kann zu reinigen sein und/oder sich in ihm befindendes, zu reinigendes Gut wie zu waschende Wäsche kann dort zu reinigen sein. Das Bleichmittel fungiert als Wasch-, Reinigungs- und Desinfektionsmittel.

Die elektrochemische Zelle ist bevorzugt zur Herstellung von Wasserstoffperoxid als Bleichmittel ausgebildet. Die elektrochemische Zelle kann zur Erzeugung von Bleichmittel mit der Funktion ausgebildet sein, weitere Bleichmittel zu erzeugen. Beispiele sind: An der Kathode z.B. einer Gasdiffusionselektrode wird im Kathodenraum Sauerstoff zu Wasserstoffperoxid reduziert, und weiterführend Wasserstoffperoxid mit einem Aktivator chemisch zu Persäure umgesetzt. An der Anode im Anodenraum werden beispielsweise Sulfate wie Na₂SO₄ zu Persulfat oxidiert, Acetate wie Natriumacetat zu Persäure oxidiert oder Sorbitanester zu Perfettsäure oxidiert. Auch andere Leitsalze können an der Anode zu weiteren Oxidationsmitteln oxidiert werden. Diese Komponenten können der elektrochemischen Zelle als die Flüssigkeit, die neben Wasser diverse Komponenten aufweisen kann, oder separat zu dem Wasser als Konzentrat zugeführt werden.

Bevorzugt weist das Flüssigkeitsleitsystem ein Schaltelement auf, das ausgebildet ist, in Abhängigkeit seiner Schaltung entweder ein Leiten der Flüssigkeit aus dem ersten Bereich der elektrochemischen Zelle in den zweiten Bereich der elektrochemischen Zelle oder aus dem ersten Bereich der elektrochemischen Zelle in den Reinigungsbereich zu ermöglichen bzw. zu erlauben. Mittels des Schaltelements lassen sich das Befüllen, die Bleichmittel-Herstellung in der vorbestimmten Menge, das Dosieren des hergestellten Bleichmittels in dem Reinigungsbereich und das Spülen der elektrochemischen Zelle sehr gut steuern. Das Schaltelement ist bevorzugt in eine verzweigte Leitung integriert, die einen Bereich des Kathodenraums als ersten Bereich der elektrochemischen Zelle sowohl mit dem zweiten Bereich der elektrochemischen Zelle als auch mit dem Reinigungsbereich verbindet. Bevorzugt ist das Schaltelement als ein Drei-Wege-Ventil ausgebildet. Bevorzugt weist das Flüssigkeitsleitsystem eine Zuführleitung auf, um die elektrochemische Zelle bevorzugt den Anodenraum mit der Flüssigkeit zu befüllen. Bevorzugt dient die Zuführleitung auch als Gasausgang für bei der Elektrolyse an der Anode entstehendes Gas wie Sauerstoff. Das Flüssigkeitsleitsystem kann alternativ ausgebildet sein, das an der Anode entstehende Gas in Richtung Kathode für die Reduktionsreaktion zu leiten.

In einer bevorzugten Ausführungsform ist in den Anodenraum ein Vorratsbehälter integriert, der über eine Trennwand und einen Überlauf von dem Anodenraum getrennt ist. Bevorzugt weist das Flüssigkeitsleitsystem die Zuführleitung zum Zuführen der Flüssigkeit in den Anodenraum, eine Verbindungsleitung zwischen dem Kathodenraum und dem Vorratsbehälter, die ausgebildet ist, die Flüssigkeit aus einem ersten Bereich des Vorratsbehälter durch den Kathodenraum in einen zweiten Bereich des Vorratsbehälters zu fördern, und eine weitere Verbindungsleitung auf, die ausgebildet ist, Flüssigkeit aus der Verbindungsleitung in den Reinigungsbereich zu fördern, wobei das Schaltelement zwischen die Verbindungsleitung und die weitere Verbindungsleitung integriert ist, um die Förderung der Flüssigkeit entweder in den zweiten Bereich des Vorratsbehälters oder in den Reinigungsbereich zu steuern.

In einer alternativ bevorzugten Ausführungsform weist das wasserführende elektrische Gerät einen weiteren Kathodenraum mit einer weiteren Kathode auf, wobei der Kathodenraum und der weitere Kathodenraum an gegenüberliegenden Seiten des Anodenraums angeordnet sind und von diesem jeweils durch eine Trennwand und einen Überlauf getrennt sind. Kommerzielle dimensionsstabile Anoden sind im Vergleich zu einer bevorzugten Gasdiffusionselektrode als Kathode und dem Separator das kostenintensivste Bauteil in der elektrochemischen Zelle. Daher bietet der Aufbau mit einer weiteren Kathode einen Preisvorteil. Bevorzugt weist das Flüssigkeitsleitsystem die Zuführleitung zum Zuführen von Flüssigkeit in den Anodenraum, eine Verbindungsleitung zwischen dem Kathodenraum und dem weiteren Kathodenraum, die ausgebildet ist, Flüssigkeit aus einem Bereich des Kathodenraum in einen Bereich des weiteren Kathodenraums zu fördern, und eine weitere Verbindungsleitung auf, die ausgebildet ist, Flüssigkeit aus der Verbindungsleitung in den Reinigungsbereich zu fördern, wobei das Schaltelement zwischen die Verbindungsleitung und die weitere Verbindungsleitung integriert ist, um die Förderung der Flüssigkeit entweder in den weiteren Kathodenraum oder in den Reinigungsbereich zu steuern. Ferner kann das Flüssigkeitsleitsystem eine noch weitere Verbindungsleitung aufweisen, die den Kathodenraum und den weiteren Kathodenraum verbindet und die ausgebildet ist, Flüssigkeit aus einem weiteren Bereich des weiteren Kathodenraum in einen weiteren Bereich des Kathodenraums zu leiten, wodurch eine noch bessere Durchmischung erreicht wird.

In einer weiteren alternativen Ausführungsform ist die elektrochemische Zelle tubulär ausgebildet. Der Kathodenraum umgibt bevorzugt den Anodenraum und ist bevorzugt von dem Anodenraum durch den Separator und einen Überlauf getrennt. Dadurch wird eine weitere Reduzierung der Bauteilelemente erreicht. Bevorzugt ist das Flüssigkeitsleitsystem ausgebildet, den Anodenraum mit der Flüssigkeit zu befüllen. Bevorzugt ist die Anode mit dem Separator umwickelt ist, um die Kathode und die Anode räumlich zu trennen. Bevorzugt weist das Flüssigkeitsleitsystem eine Verbindungsleitung zwischen einem ersten Bereich des Kathodenraums und einem weiteren Bereich des Kathodenraums auf, die ausgebildet ist, Flüssigkeit aus dem ersten Bereich des Kathodenraums in den weiteren Bereich des Kathodenraums zu fördern, die Zuführleitung zum Zuführen der Flüssigkeit in den Anodenraum, und eine weitere Verbindungsleitung auf, die ausgebildet ist, Flüssigkeit aus der Verbindungsleitung in den Reinigungsbereich zu fördern, wobei das Schaltelement zwischen die Verbindungsleitung und die weitere Verbindungsleitung integriert ist, um die Förderung der Flüssigkeit entweder in den oberen Bereich des Vorratsbehälters oder in den Reinigungsbereich zu steuern.

Bevorzugt weist der Anodenraum eine oder mehrere Öffnungen z.B. in Form von Bohrungen, waage- oder senkrechten Schlitzen, besonders bevorzugt im unteren Bereich der Trennwand auf, bezogen auf eine betriebsgemäße Aufstellposition der elektrochemischen Zelle. Dadurch wird ein Abfluss des sauren Anolyten nach der Elektrolyse ermöglicht. Alternativ kann eine Siphonbauform die gleiche Aufgabe erfüllen.

Bevorzugt ist der Separator als poröses Diaphragma oder Kationenaustauschermembran ausgebildet. Besonders bevorzugt ist der Separator als Kationaustauschermembran ausgebildet. Bevorzugt ist ein Separator, der eine hohe Selektivität für einwertige Ionen wie H⁺ und/oder Na⁺ aufweist und unempfindlich gegenüber Austrocknen und mehrwertigen Ionen wie z.B. Mg²⁺ und Ca²⁺ ist. Alternativ bevorzugt ist der Separator als poröses Diaphragma besonders bevorzugt auf Basis eines Polyphenylensulfidgewebes ausgebildet, das symmetrisch mit einem Polymer wie z.B. Polysulfon und einem anorganischen Stoff zur Einstellung der hydrophilen Eigenschaften, z.B. Zirkoniumdioxid (ZrOz) beschichtet ist. Weiterhin alternativ bevorzugt ist der Separator als poröses Diaphragma auf Basis von Zellglas oder Celluloseacetat ausgebildet. Das poröse Diaphragma auf Celluloseacetatbasis kann beispielsweise als Blaubandfilter ausgebildet sein.

In einer bevorzugten Ausführungsform ist die Kathode und/oder die weitere Kathode als Gasdiffusionselektrode oder Festbettelektrode ausgebildet. Die Kathode und/oder die weitere Kathode kann als Gasdiffusionselektrode mit einem Substrat/Stromkollektor aufweisend ein Metallnetz beispielsweise aus Edelstahl, Nickel, vergoldetes Nickel, Kunststoff, einem Katalysator aufweisend z.B. Kohlenstoffruß, Edelmetalle wie Platin, Graphit, bordotierte Variationen der genannten Materialien und/oder Kombinationen der genannten Materialien, ein Bindemittel wie PTFE (Polytetrafluorethylen), weitere halogenhaltige Polymere, mit einem Verhältnis von Katalysator: Bindemittel von 1:9, bevorzugt 6:4 ausgebildet sein. Die Festbettelektrode kann beispielsweise Katalysatorpellets als Festbett und einen Katalysator wie Ruß, Kohlenstoff, Graphit, Graphen, Carbon Nanotubes, Edelmetalle, bordotierter Diamant, bordotierte Variationen der genannten Materialien und/oder Kombination der genannten Materialien aufweisen.

Bevorzugt ist die Anode als Platin-Anode, Stahl-Anode, vergoldete Anode, dimensionsstabile Anode oder Graphit-Anode ausgebildet. Die Anode kann als Netz/Drahtgewebe, Streckmetall, Sintermetall oder Lochblech ausgebildet sein. Bevorzugter kann sie, wenn als Platin-Anode ausgebildet, ein Drahtgewebe oder eine Beschichtung auf einem Titanstreckmetall aufweisen. Wenn sie als dimensionsstabile Anode ausgebildet ist, kann sie beispielsweise IrO₂, RuOz, Oxide der Platingruppe und ein Substrat beispielsweise aus Titan(streckmetall), Niob, Tantal und/oder Titanpolymercompound aufweisen. Sie kann auch mit Graphit und/oder Graphitpolymercompounds ausgebildet sein.

Die elektrochemische Zelle weist bevorzugt ein Zellgehäuse auf, das aus einem Kunststoff wie PMMA (Polymethylmethacyrlat), PC (Polycarbonat), PP, PE oder PA (Polyamid) ausgebildet ist.

Die Trennwand oder Trennwände dient bzw. dienen zur Abschirmung des Anodenraums, so dass dieser nicht umgewälzt wird, während die Flüssigkeit in dem Kathodenraum und ggf. dem weiteren Kathodenraum oder dem Vorratsbehälter im Kreislauf gefördert wird. Das Flüssigkeitsleitsystem weist bevorzugt mindestens eine Pumpe auf, um die Flüssigkeit im Kreislauf in der elektrochemischen Zelle und aus der elektrochemischen Zelle in den Reinigungsbereich zu fördern. Die Pumpe(n) kann z.B. als Schlauchquetsch-, Kreisel-, Kolben- oder Zahnradpumpe(n) ausgebildet sein. Leitungen können als Schläuche, Rohre oder dgl. ausgebildet sein.

Die elektrochemische Zelle ist bevorzugt mittels Montage durch Verschweißen, Verschrauben, Verklemmen und/oder Verkleben gefertigt.

Das Flüssigkeitsleitsystem weist bevorzugt Schläuche zum Leiten der Flüssigkeit und Ventile auf. Die elektrochemische Zelle weist bevorzugt Dichtungen aus Materialien wie z.B. Silikone oder halogenierte Polymere auf. Des Weiteren kann die Kontaktierung der Elektroden mit den stromversorgenden Kabeln variabel ausgebildet sein. Die Elektrodenkontaktierung befindet sich bevorzugt im oberen Bereich der elektrochemischen Zelle, bezogen auf ihre betriebsgemäße Aufstellposition, damit Kurzschlüsse und eine Beschädigung bei flüssigen Leckagen ausgeschlossen werden können. Es besteht aber auch die Möglichkeit, die Kontaktierung mittig oder unterhalb der Zelle anzubringen. Die Anzahl an Kontaktierungen je Elektrode kann variieren. Bevorzugt sind zwei Kontaktierungen je Elektrode, denkbar sind aber auch mehr als zwei Kontaktierungen oder nur eine Kontaktierung. Die Art der Kontaktierung kann ebenfalls variieren. Bevorzugt sind Flachsteckhülsen, Kabelschuhe, Schraubverbindungen, sonstige lösbare Kontaktierungen, Stecker, Lot-, Kleb- oder Schweißkontaktierungen und sonstige nicht lösbare Kontaktierungen.

In einer bevorzugten Ausführungsform weist das wasserführende elektrische Gerät weiterhin eine Luftversorgungseinrichtung zum Versorgen der elektrochemischen Zelle mit Luft auf. Die Luftversorgungseinrichtung kann z.B. einen Lüfter bzw. Ventilator oder eine Membranpumpe aufweisen. Das wasserführende elektrische Gerät kann aber auch ohne Luftversorgungseinrichtung ausgebildet sein, z.B. wenn die Gasdiffusionselektrode selbstatmend ausgebildet ist.

Bevorzugt weist das wasserführende elektrische Gerät weiterhin einen Füllstandsensor auf, der ausgebildet ist, einen Füllstand der elektrochemischen Zelle, bevorzugt des Vorratsbehälters oder des weiteren Kathodenraums, zu sensieren. Dadurch wird ein optimaler Füllstand in der elektrochemischen Zelle gewährleistet. Der Füllstandsensor kann z.B. als ein Schwimmer ausgebildet sein.

Bei dem wasserführenden elektrischen Gerät kann es sich um ein privat genutztes Gerät oder gewerblich eingesetztes Gerät handeln. Das wasserführende elektrische Gerät ist vorzugsweise ein zum Waschen, Spülen und/oder Desinfizieren geeignetes Gerät, das gewerblich oder im Haushalt Verwendung findet. Das wasserführende elektrische Gerät ist vorzugsweise ein Reinigungsgerät. Im Sinne der Erfindung ist der Reinigungsbereich jedweder Bereich, der zum Reinigen von Wasch- und/oder Spülgut oder sich selber geeignet ist wie beispielsweise Laugenbehälter-/Trommel-Aggregat einer Waschmaschine, einen Spülraum eines Geschirrspülers oder eines Desinfektors. Bevorzugt ist das wasserführende elektrische Gerät als eine Waschmaschine, ein Geschirrspüler oder ein Desinfektor ausgebildet. Die in den Reinigungsbereich zugeführte Elektrolytlösung eignet sich beispielsweise als Reinigungsmittel zum Waschen von Waschgut wie beispielsweise Wäsche, Geschirr, medizinische Instrumente oder Laborgeräte und/oder den Reinigungsbereich selber.

Wenn das wasserführende elektrische Gerät als ein Waschautomat ausgebildet ist, übernimmt die elektrochemische Zelle die Erzeugung des Bleichmittels, also eine Waschmittelfunktion. Dabei wird mit flüssigen Komponenten eine Bleichleistung eines hochwertigen Vollwaschmittel-Pulvers erreicht. Dadurch wird die Reichweite und Leistung der Chemie erhöht. Das System ist sowohl in einem 2-Komponenten-Chemiesystem wie TwinDos (Miele &Cie. KG, Deutschland, Gütersloh) als auch in einer Multikomponentendosierung einsetzbar. Der Waschautomat-Nutzer hat dadurch folgende Vorteile: Ökologische und kostengünstige Erzeugung des Bleichmittel aus Strom, Luft und einer Komponente wie z.B. Builder bzw. Wasserenthärter für den Waschprozess. Verbessertes Waschergebnis - vor allem bei bleichbaren Flecken -, so dass weiße Wäsche weiß bleibt. Eine verbesserte Hygiene im Waschautomaten und der Wäsche. Im Falle des Einsatzes von Kartuschen in einem Dosiersystem wird eine längere Reichweite der Kartuschen erzielt, so dass weniger Kartuschenwechsel durch bessere Nutzung der Chemie erreicht wird. Eine verbesserte Sicherheit beim Nutzer, weil sich kein Bleichmittel in den Kartuschen befindet. Eine nahezu komplette Abdeckung der Waschmittel und Programme bei einer Vier-Komponenten-Dosierung inklusive einer Duftabdeckung. Die Kartuschen müssen zudem nicht entlüftet werden, da kein ausgasendes Bleichmittel enthalten ist. Wenn eine Builder enthaltende Kartusche kein Wasserstoffperoxid enthält, wird bei einem Auslaufen nicht eine verzinkte Bodenwanne des Waschautomaten beschädigt, was eine Gefahr des Durchrostens der verzinkten Bodenwanne reduziert. Es wird eine Herstellung von 1 bis 3 g Peressigsäure oder 3 g alkalischen Wasserstoffperoxid für einen Bleichvorgang innerhalb von 20 Min. generiert, um auch bei kurzen Programmlaufzeiten Bleichen zu können. Diese Vorteile sind bei dem Geschirrspüler und Desinfektor ebenfalls gegeben.

Wasserstoffperoxid kann als Bleich- oder Desinfektionsmittel verwendet werden. Da sich das Wasserstoffperoxid mit geeigneten Bleichaktivatoren zu Peressigsäure umsetzen lässt, erweitern sich die Einsatzmöglichkeiten entsprechend. So sind auch Anwendungen in der Lebensmittelindustrie wie z.B. die CIP (Cleaning in Place) Reinigung denkbar. Im Sinne der Erfindung umfasst der Ausdruck "wasserführendes elektrisches Gerät" auch CIP- (Cleaningin-place-) Anlagen oder dergleichen, die beispielsweise in der Hospitalhygiene und Lebensmittelindustrie eingesetzt werden. Die Erfindung betrifft daher auch wasserführende elektrische Geräte, bei denen verfahrenstechnische Anlagen wie beispielsweise pharmazeutische Anlagen oder biologische Anlagen gereinigt werden, was in der Regel ortsgebunden durchgeführt wird.

Der Ausdruck "wasserführendes elektrisches Gerät" umfasst weiterhin z.B. in der Landwirtschaft Geräte mit Trinkwasserleitungen in Ställen für Nutztiere zur Desinfektion und/oder Verhinderung einer Keimbildung in den Wasserleitungen, Pflanzenschutzgeräte wie Spritze, handbetrieben oder als Anbau für Traktoren sowie für Agrarflugzeuge.

Ferner umfasst der Ausdruck "wasserführendes elektrisches Gerät" Geräte zur Erzeugung von Desinfektionsmittel beispielsweise als Spender in sanitären Einrichtungen.

Bevorzugt weist das wasserführende elektrische Gerät eine Dosiereinrichtung auf, die zum Zuführen von der Flüssigkeit und/oder einem Konzentrat zur Herstellung der Flüssigkeit in einer vorbestimmten Dosis in die elektrochemische Zelle geeignet ist, die zwischen dem Reinigungsbereich und der Dosiereinrichtung angeordnet ist. Vorzugsweise ist die Dosiereinrichtung eine automatische Dosiereinrichtung. Unter einer automatischen Dosiereinrichtung wird im Sinne der Erfindung eine Dosiereinrichtung verstanden, die der elektrochemischen Zelle und/oder dem Reinigungsbereich automatisch eine vorbestimmte Dosis an der Flüssigkeit, des Konzentrats, oder weiterer Komponenten zuführt, wenn dies erforderlich ist.

Die Dosiereinrichtung kann ein- oder mehrteilig ausgebildet sein. In einer bevorzugten Ausführungsform weist die Dosiereinrichtung mindestens zwei Dosierkammern auf, die benachbart oder beabstandet zueinander ausgebildet sind. Jede Dosierkammer ist vorzugsweise über jeweils eine Leitung mit dem Reinigungsbereich verbunden, um ihm bei Betrieb Flüssigkeit zuführen zu können. In mindestens einer der Leitungen ist die elektrochemische Zelle zwischen der jeweiligen zugehörigen Dosierkammer und dem Reinigungsbereich angeordnet. Unter dem Begriff Dosierkammer werden im Sinne der Erfindung auch auswechselbare Behälter wie beispielweise Kartuschen, Lagerbehälter oder Flaschen verstanden, die in einer Haltevorrichtung angeordnet sind. Bei den Leitungen kann es sich um Schläuche, Rohre, Kanäle oder dergleichen handeln.

Ferner betrifft die Erfindung ein Verfahren zum Betreiben eines wasserführenden elektrischen Geräts nach einer oder mehrerer der vorangehend beschriebenen Ausführungsformen, aufweisend folgende Schritte
- Befüllen der elektrochemischen Zelle mit der Flüssigkeit;
- Durchleiten der Flüssigkeit durch den Kathodenraum und ggf. den weiteren Kathodenraum oder den Vorratsbehälter und Anlegen eines Stroms an die Kathode und die Anode, um ein Bleichmittel in einer vorbestimmten Menge herzustellen; und
- Fördern der vorbestimmten Menge des hergestellten Bleichmittels in den Reinigungsbereich.

Die genaue Art der Durchleitung ist grundsätzlich beliebig. Es kann sich beispielsweise um einmaliges Durchströmen handeln. Es kann sich aber auch beispielsweise um ein Umwälzen im Kreislauf handeln.

Bevorzugt wird die elektrochemische Zelle über den Anodenraum mit der Flüssigkeit bevorzugt in Form von Wasser und einem Elektrolyt-haltigem Konzentrat befüllt. Mittels Überlauf gelangt bevorzugt die Flüssigkeit in den Kathodenraum und ggf. den weiteren Kathodenraum oder den Vorratsbehälter. Anschließend wird bevorzugt eine Umwälzung mittels der Pumpe und Anlegen des Stromes an Anode und Kathode durchgeführt. Durch die Bildung von OH⁻-Ionen an der Kathode ergibt sich eine Alkalisierung des umgewälzten Elektrolyten. Der Anodenraum wird bevorzugt nicht umgewälzt. Er erwärmt sich stark auf Grund des Energieeintrages. Durch den Verbrauch von OH⁻-Ionen und der Bildung von H⁺-Ionen ergibt sich ein Absenken des pH-Werts der Flüssigkeit in dem Anodenraum. Durch die Temperaturerhöhung der Flüssigkeit in dem Anodenraum ergibt sich eine Volumenausdehnung und daraus ein Überlaufen Richtung Kathodenraum und ggf. weiteren Kathodenraum oder Vorratsbehälter, wodurch sich der pH-Wert der umgewälzten Katholyt-Flüssigkeit nicht so stark erhöht wie bei einer Zelle mit zwei getrennten Kreisläufen, d.h., einer Umwälzung sowohl des Katholyten als auch des Anolyten bei einer getrennten Zelle mittels Separators. Bei höheren pH-Werten wird der Abbau des Bleichmittels z.B. Wasserstoffperoxids eher begünstigt als bei niedrigeren pH-Werten, wodurch sich ein Vorteil ergibt: Die Zersetzungsrate des Wasserstoffperoxids in der Masse des Elektrolyten nimmt mit steigenden pH-Wert zu. Ein Ausgasen von Sauerstoff in dem Anodenraum erfolgt bevorzugt über die Zuführleitung zum Anodenraum. Alternativ kann der Sauerstoff in Richtung Kathode für die Reduktionsreaktion geleitet werden. Wenn eine vorbestimmte Menge des hergestellten Bleichmittels hergestellt ist, wird das Bleichmittel in den Reinigungsbereich gefördert. D.h., die Flüssigkeit wird in der elektrochemischen Zelle im Kreislauf umgewälzt, solange bis die gewünschte Menge an Bleichmittels erreicht ist, und wird anschließend zum Reinigungsbereich d.h. dem Anwendungsort bevorzugt unter Verwendung der Pumpe und des Schaltelements gefördert, das nun geschaltet wird, um das Fördern der Flüssigkeit in den Reinigungsbereich zu ermöglichen.

Ein Ausführungsbeispiel der Erfindung ist in den Zeichnungen rein schematisch dargestellt und wird nachfolgend näher beschrieben. Es zeigt
- Fig. 1: eine Teil-Querschnittsansicht eines wasserführenden elektrischen Geräts gemäß einer ersten Ausführungsform;
- Fig. 2: eine Teil-Querschnittsansicht eines wasserführenden elektrischen Geräts gemäß einer zweiten Ausführungsform; und
- Fig. 3: eine Teil-Querschnittsansicht eines wasserführenden elektrischen Geräts gemäß einer dritten Ausführungsform.

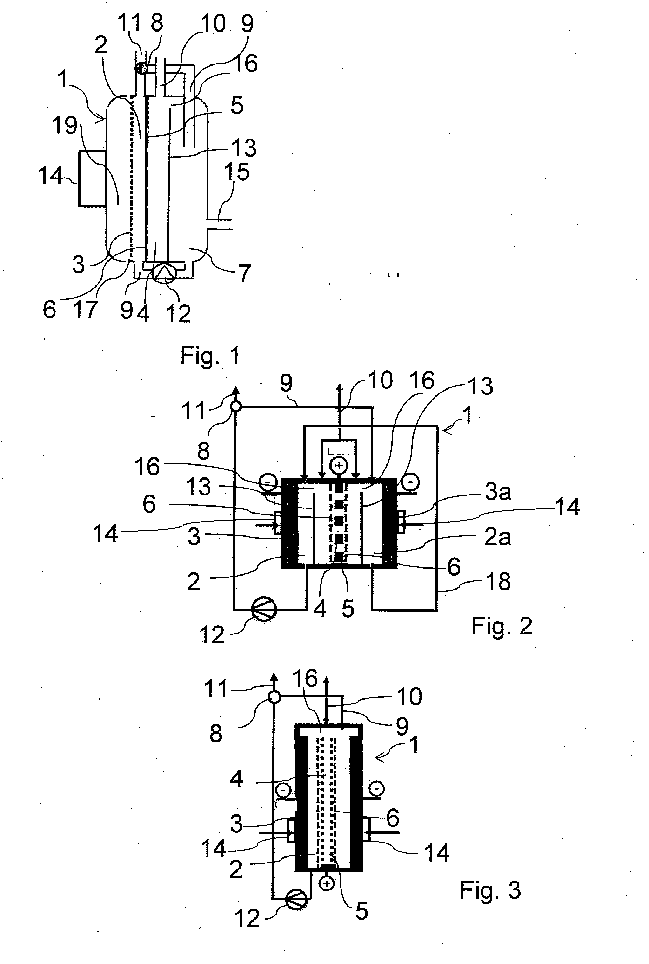

Fig. 1 zeigt eine Teil-Querschnittsansicht eines wasserführenden elektrischen Geräts gemäß einer ersten Ausführungsform. Das wasserführende elektrische Gerät weist einen Reinigungsbereich (nicht gezeigt), der selber zu reinigen und/oder in dem sich zu reinigendes Gut befinden kann. Ferner weist das wasserführende elektrische Gerät eine elektrochemischen Zelle 1 auf, die ausgebildet ist, ein Bleichmittel herzustellen, das in dem Reinigungsbereich seine Wirkung entfallen soll. Die elektrochemische Zelle 1 weist einen Kathodenraum 2 mit einer Kathode 3 und einen Anodenraum 4 mit einer Anode 5 auf, wobei in den Anodenraum 4 ein Vorratsbehälter 7 integriert ist, der über eine Trennwand 13 und einen Überlauf 16 von dem Anodenraum 4 getrennt ist. Der Anodenraum 4 weist eine oder mehrere Öffnungen in der Trennwand 13 auf, durch die ein Abfluss des sauren Anolyten nach einer Elektrolyse ermöglicht wird. Alternativ kann eine Siphonbauform die gleiche Aufgabe erfüllen, was hier nicht gezeigt ist. Weiterhin weist die elektrochemische Zelle 1 einen Separator 6 zum Trennen des Kathodenraums 2 und des Anodenraums 4 auf, der in einer Zero Gap-Anordnung mit der Anode 5 angeordnet ist. Ferner weist die elektrochemische Zelle 1 ein Flüssigkeitsleitsystem auf, das ausgebildet ist, die elektrochemische Zelle 1 mit Flüssigkeit zu befüllen, die Flüssigkeit aus einem ersten Bereich der elektrochemischen Zelle 1 in einen zweiten Bereich der elektrochemischen Zelle 1 zu fördern und die Flüssigkeit aus der elektrochemischen Zelle 1 in den Reinigungsbereich zu fördern. Das Flüssigkeitsleitsystem weist eine Verbindungsleitung 9 zwischen dem Kathodenraum 2 und dem Vorratsbehälter 7, die ausgebildet ist, Flüssigkeit aus einem ersten Bereich des Vorratsbehälters 7 durch den Kathodenraum 2 in einen zweiten Bereich des Vorratsbehälters 7 zu fördern, eine Zuführleitung 10 zum Zuführen von Wasser und evtl. Elektrolytkonzentrat in den Anodenraum 4, eine weitere Zuführleitung 15 zum Zuführen eines Elektrolytkonzentrats in den Anodenraum 4 insbesondere in den integrierten Vorratsbehälter 7 und eine weitere Verbindungsleitung 11 auf, die ausgebildet ist, Flüssigkeit aus der Verbindungsleitung 9 in den Reinigungsbereich zu fördern, wobei ein Schaltelement 8 z.B. in Form eines Drei-WegeVentils zwischen die Verbindungsleitung 9 und die weitere Verbindungsleitung 11 integriert ist, um die Förderung der Flüssigkeit entweder in den zweiten Bereich des Vorratsbehälters 7 oder in den Reinigungsbereich zu steuern. Ferner weist die elektrochemische Zelle 1 eine Pumpe 12 auf, die ausgelegt ist, die Flüssigkeit zu fördern. Ferner weist das wasserführende elektrische Gerät optional eine Luftversorgungseinrichtung 14 zum Versorgen der elektrochemischen Zelle 1 insbesondere der Kathode 3 in Form einer Gasdiffusionselektrode mit Luft auf.

Bei Betrieb des wasserführenden elektrischen Geräts wird, wenn ein Bleichmittel wie Wasserstoffperoxid zur Durchführung einer Reinigung in dem Reinigungsbereich benötigt wird, ein Verfahren durchgeführt, das einen Schritt Befüllen der elektrochemischen Zelle 1 insbesondere des Anodenraums 4 mit der Flüssigkeit durchgeführt wird, wobei durch die Zuführleitung 10 Wasser und durch die weitere Zuführleitung 15 Elektrolytkonzentrat zugeführt wird. Es wird Strom an die Anode 5 und Kathode 3 angelegt. Der Anodenraum 4 erwärmt sich stark auf Grund des Energieeintrages. Durch die Temperaturerhöhung der Flüssigkeit im Anodenraum 4 ergibt sich eine Volumenausdehnung und daraus ein Überlaufen Richtung Vorratsbehälter 7. Mittels Überlauf gelangt die Flüssigkeit in den Vorratsbehälter 7 und in den Kathodenraum 2 und wird im Kreislauf mittels der Pumpe 12 durch diese gefördert bzw. umgewälzt. Der Anodenraum 4 wird nicht umgewälzt. Ein Ausgasen von Sauerstoff im Anodenraum 4 erfolgt über die Zuführleitung 10 zum Anodenraum 4. Alternativ kann der Sauerstoff in Richtung Kathode 3 für die Reduktionsreaktion geleitet werden. Wenn eine vorbestimmte Menge des hergestellten Bleichmittels hergestellt ist, wird das Bleichmittel in den Reinigungsbereich gefördert. D.h., die Flüssigkeit wird in der elektrochemischen Zelle 1 im Kreislauf umgewälzt, solange bis die gewünschte Menge an Bleichmittels erreicht ist und wird anschließend zum Reinigungsbereich unter Verwendung der Pumpe 12 und des Schaltelements 8 gefördert, das nun geschaltet wird, um das Fördern der Flüssigkeit in den Reinigungsbereich zu ermöglichen. Ggf. kann die Kathode 3 mittels der Luftversorgungseinrichtung 14 mit Luft versorgt werden.

Fig. 2 zeigt eine Teil-Querschnittsansicht eines wasserführenden elektrischen Geräts gemäß einer zweiten Ausführungsform. Das in Fig. 2 gezeigte wasserführende elektrische Gerät entspricht dem in Fig. 1 gezeigten wasserführenden elektrischen Gerät mit dem Unterschied, dass es keine weitere Zuführleitung 15 aufweist, sondern die Flüssigkeit in Form von Wasser und Elektrolytkonzentrat durch die Zuführleitung 10 zuführt. Ferner weist das wasserführende elektrische Gerät anstelle des Vorratsbehälters 7 einen weiteren Kathodenraum 2a mit einer weiteren Kathode 3a auf, wobei der Kathodenraum 2 und der weitere Kathodenraum 2a an gegenüberliegenden Seiten des Anodenraums 4 angeordnet sind und von diesem jeweils durch eine Trennwand 13 und einen Überlauf 16 getrennt sind. Zusätzlich zu der Verbindungsleitung 9, die einen ersten Bereich des Kathodenraums 2 mit einem ersten Bereich des weiteren Kathodenraums 2a zur Zufuhr von Flüssigkeit dorthin verbindet, verbindet eine noch weitere Verbindungsleitung 18 einen zweiten Bereich des weiteren Kathodenraums 2a mit einem zweiten Bereich des Kathodenraums 2 zur Leitung der Flüssigkeit dorthin. Die Öffnungen sind der Übersichtlichkeit halber nicht dargestellt. Die Zufuhr von Luft durch die Luftversorgungseinheit 14 ist durch Pfeile dargestellt. Weiterhin ist das Wegführen des Gases von der Anode 5 durch die Zuführleitung 10 durch einen Pfeil dargestellt und das Zuführen der Flüssigkeit in den Anodenraum 4 durch weitere Pfeile dargestellt. Ferner ist eine Bewegung der Flüssigkeit durch Pfeile an den Verbindungsleitungen 9, 11, 18 dargestellt.

Fig. 3 zeigt eine Teil-Querschnittsansicht eines wasserführenden elektrischen Geräts gemäß einer dritten Ausführungsform. Das in Fig. 3 gezeigte wasserführende elektrische Gerät entspricht dem in Fig. 1 gezeigten wasserführenden elektrischen Gerät mit dem Unterschied, dass es keine weitere Zuführleitung 15 aufweist, sondern die Flüssigkeit in Form von Wasser und Elektrolytkonzentrat durch die Zuführleitung 10 zugeführt wird, dass in den Anodenraum 4 kein Vorratsbehälter integriert ist, sondern die elektrochemische Zelle 1 tubulär ausgebildet ist und der Kathodenraum 2 den Anodenraum 4 umgibt und von dem Anodenraum 4 durch den Separator 6 und einen Überlauf 16 getrennt ist, wobei die Verbindungsleitung 9 einen ersten Bereich des Kathodenraums 2 mit einem zweiten Bereich des Kathodenraums 2 verbindet. Die Öffnungen sind der Übersichtlichkeit halber nicht dargestellt. Die Zufuhr von Luft durch die Luftversorgungseinheit 14 ist durch Pfeile dargestellt. Weiterhin ist das Wegführen des Gases von der Anode 5 durch die Zuführleitung 10 und das Zuführen der Flüssigkeit in den Anodenraum 4 durch einen Doppelpfeil dargestellt. Ferner ist eine Bewegung der Flüssigkeit durch Pfeile an den Verbindungsleitungen 9, 11 dargestellt.

Die Zelle kann auch einmalig durchströmt werden.

### Bezugszeichenliste

- 1: elektrochemische Zelle
- 2, 2a: Kathodenraum
- 3, 3a: Kathode, GDE
- 4: Anodenraum
- 5: Anode
- 6: Separator
- 7: Vorratsbehälter
- 8: Schaltelement
- 9: Verbindungsleitung
- 10: Zuführleitung
- 11: weitere Verbindungsleitung
- 12: Pumpe
- 13: Trennwand
- 14: Luftversorgungseinheit
- 15: weitere Zuführleitung
- 16: Überlauf
- 17: Öffnung
- 18: noch weitere Verbindungsleitung
- 19: Gasraum

## Patentansprüche

1. Wasserführendes elektrisches Gerät mit einem Reinigungsbereich und einer elektrochemischen Zelle (1), die ausgebildet ist, ein Bleichmittel herzustellen, wobei die elektrochemische Zelle (1) einen Kathodenraum (2) mit einer Kathode (3), einen Anodenraum (4) mit einer Anode (5), einen Separator (6) zum Trennen des Kathodenraums (2) und des Anodenraums (4) in einer Zero Gap-Anordnung mit der Anode (5) und ein Flüssigkeitsleitsystem aufweist, das ausgebildet ist, die elektrochemische Zelle (1) mit Flüssigkeit zu befüllen, die Flüssigkeit aus einem ersten Bereich der elektrochemischen Zelle (1) in einen zweiten Bereich der elektrochemischen Zelle (1) zu fördern und die Flüssigkeit aus der elektrochemischen Zelle (1) in den Reinigungsbereich zu fördern.

2. Wasserführendes elektrisches Gerät nach Anspruch 1, **dadurch gekennzeichnet, dass** in den Anodenraum (4) ein Vorratsbehälter (7) integriert ist, der über eine Trennwand (13) und einen Überlauf (16) von dem Anodenraum (4) getrennt ist.

3. Wasserführendes elektrisches Gerät nach Anspruch 1, **gekennzeichnet durch** einen weiteren Kathodenraum (2a) mit einer weiteren Kathode (2a), wobei der Kathodenraum (2) und der weitere Kathodenraum (2a) an gegenüberliegenden Seiten des Anodenraums (4) angeordnet sind und von diesem jeweils durch eine Trennwand (13) und einen Überlauf (16) getrennt sind.

4. Wasserführendes elektrisches Gerät nach Anspruch 1, **dadurch gekennzeichnet, dass** die elektrochemische Zelle (1) tubulär ausgebildet ist und der Kathodenraum (2) den Anodenraum (4) umgibt und von dem Anodenraum (4) durch den Separator (6) und einen Überlauf (16) getrennt ist.

5. Wasserführendes elektrisches Gerät nach einem der vorangehenden Ansprüche,
**dadurch gekennzeichnet, dass** das Flüssigkeitsleitsystem ein Schaltelement (8), bevorzugt ein Drei-Wege-Ventil aufweist, das ausgebildet ist, in Abhängigkeit seiner Schaltung entweder ein Leiten der Flüssigkeit aus dem ersten Bereich der elektrochemischen Zelle (1) in den zweiten Bereich der elektrochemischen Zelle (1) oder aus dem ersten Bereich der elektrochemischen Zelle (1) in den Reinigungsbereich zu ermöglichen.

6. Wasserführendes elektrisches Gerät nach einem der vorangehenden Ansprüche,
**dadurch gekennzeichnet, dass** der Separator (6) als poröses Diaphragma oder Kationenaustauschermembran ausgebildet ist.

7. Wasserführendes elektrisches Gerät nach einem der vorangehenden Ansprüche,
**dadurch gekennzeichnet, dass** die Kathode (3) und/oder die weitere Kathode (3a) als Gasdiffusionselektrode oder Festbettelektrode ausgebildet ist und/oder die Anode als Platin-Anode, Stahl-Anode, vergoldete Anode, dimensionsstabile Anode oder Graphit-Anode ausgebildet ist.

8. Wasserführendes elektrisches Gerät nach einem der vorangehenden Ansprüche, **gekennzeichnet durch** eine Luftversorgungseinrichtung (14) zum Versorgen der elektrochemischen Zelle (1) mit Luft.

9. Wasserführendes elektrisches Gerät nach einem der vorangehenden Ansprüche, **gekennzeichnet durch** einen Füllstandsensor, der ausgebildet ist, einen Füllstand in der elektrochemischen Zelle (1) zu sensieren.

10. Verfahren zum Betreiben eines wasserführenden elektrischen Geräts nach einem der vorangehenden Ansprüche, aufweisend folgende Schritte:
- Befüllen der elektrochemischen Zelle (1) mit der Flüssigkeit;
- Durchleiten der Flüssigkeit durch den Kathodenraum (2) und ggf. den weiteren Kathodenraum (2a) oder den Vorratsbehälter (7) und Anlegen eines Stroms an die Kathode (3) und die Anode (5), um ein Bleichmittel in einer vorbestimmten Menge herzustellen; und
- Fördern der vorbestimmten Menge des hergestellten Bleichmittels in den Reinigungsbereich.
